# EUROPEAN PATENT APPLICATION

(11) **EP 1 731 283 A1**
(43) Date of publication of application: **13.12.2006**
(21) Application number: 05019063.6
(22) Date of filing: 02.09.2005
(51) Int. Cl.: B29B 17/00

(54) **A method for recycling carpet**

(30) Priority: 01.06.2005 US 142014
(71) Applicant: Infiltrator Systems, Inc., Old Saybrook, Connecticut 06475 (US)
(72) Inventor: Moore, Roy E., Jr., Kilingworth CT 06419 (US); Inch, Peter, Lexington, KY 40511 (US)
(74) Representative: Stenger, Watzke & Ring

(57) **Abstract**

In one embodiment, the method for recycling carpet can comprise decreasing an average size of the recycle carpet to form a processed carpet, wherein a bulk density of the recycle carpet is changed by less than or equal to about 15% during the decreasing. The processed carpet can be shear mixed and melted to form a melt ribbon which can be processed in a vented extruder to form an extrudate. Optionally, the extrudate can be pelletized.

## Description

### BACKGROUND OF THE INVENTION

This disclosure relates to recycling carpet, and also relates to making articles from recycled carpet.

The use of synthetic fibers has increased in many areas of technology, including various types of carpeting and other floor covering. Increased production of carpets, however, creates the problem of what to do with used carpet after it exhausts its service life.

Significant effort has been expended on identifying environmentally responsible methods for disposing of flooring material. However, an obstacle to successful recycling of carpet is the fact that carpet is currently manufactured from a number of different synthetic materials that have varying physical and chemical characteristics. For example, conventional carpet materials typically include several layers. The simplest types of carpet might have fibrous pile (e.g., nylon, PET, or polypropylene) fused directly to a thermoplastic, typically polyolefin, backing. There can also be a secondary binder or substrate layer, a reinforcing web material through which the pile is attached, and/or separate glue that is used to anchor the pile to the backing. The glue can be, for example, styrene-butadiene rubber, applied as a latex, filled with an inorganic filler such as calcium carbonate.

Successful attempts at recycling such multi-component products have been severely limited. Efforts have focused on methods for reprocessing fiber-containing waste materials wherein the process results in a fiber-containing final product. However these types of processes are restricted in utility to the limited application where composite (fiber/matrix) materials are useful.

Other recycling approaches have focused on separating out the individual materials for re-use. These methods, while effective in reclaiming individual synthetic materials, are extremely expensive to the extent of often being cost prohibitive. Further, the additional energy required to affect the necessary processing steps at least partially reduces the environmental advantage of recycling or reclaiming.

Additional work needs to be done in the area of recycling carpet to enable cost effective recycling thereof on a production scale and not merely on a laboratory scale.

### BRIEF DESCRIPTION OF THE INVENTION

Disclosed herein are methods for recycling carpet, methods for making articles with the recycled carpet, and articles made therefrom.

In one embodiment, the method for recycling carpet can comprise decreasing an average size of the recycle carpet to form a processed carpet, wherein a weight per unit area of the recycle carpet is changed by less than or equal to about 15% during the decreasing. The processed carpet can be shear mixed and melted to form a melt ribbon which can be processed in a vented extruder to form an extrudate. Optionally, the extrudate can be pelletized.

In another embodiment, the method for recycling carpet can comprise: melting recycle carpet in an extruder to form an initial extrudate, shear mixing the initial extrudate in a shear mixer to form a melt ribbon, processing the melt ribbon in a vented extruder to form a subsequent extrudate, and optionally pelletizing the subsequent extrudate.

In yet another embodiment, the method for recycling carpet can comprise: decreasing an average initial size of recycle carpet to an average processed size of less than or equal to about 5 inches by less than or equal to about 5 inches, to form a processed carpet, while a bulk density of the processed carpet is greater than or equal to about 1.5 lb/ft³, shear mixing and melting the processed carpet to form a melt ribbon, and processing the melt ribbon in a vented extruder to form an extrudate.

The above described and other features are exemplified by the following figures and detailed description.

### BRIEF DESCRIPTION OF THE DRAWINGS

Refer now to the Figures, which are meant to be exemplary, not limiting.

Figure 1 is a flow diagram of one embodiment of a carpet recycling method.

Figure 2 is a flow diagram of another embodiment of a carpet recycling method.

### DETAILED DESCRIPTION

Recycled carpet can be converted into a material suitable for use, for example, in various molding processes (e.g., blow molding, injection molding, and the like). The carpet can be employed to form various articles, including, but not limited to, leaching chamber(s), e.g., for dispersing liquids in soil, of the type having a hollow interior with open ends and an open bottom enabling passage of liquids therethrough; endplate(s) for use with a leaching chamber for dispersing liquids in soil, of the type having a hollow interior with open ends, and sidewalls with perforations enabling passage of liquids therethrough, and wherein the endplate comprises an inner wall and an outer wall defining a central portion having an interior channel and optionally at least one connector capable of engaging an edge of a leaching chamber, with physical contact with both an inner surface and an outer surface of the leaching chamber; pallets; and the like.

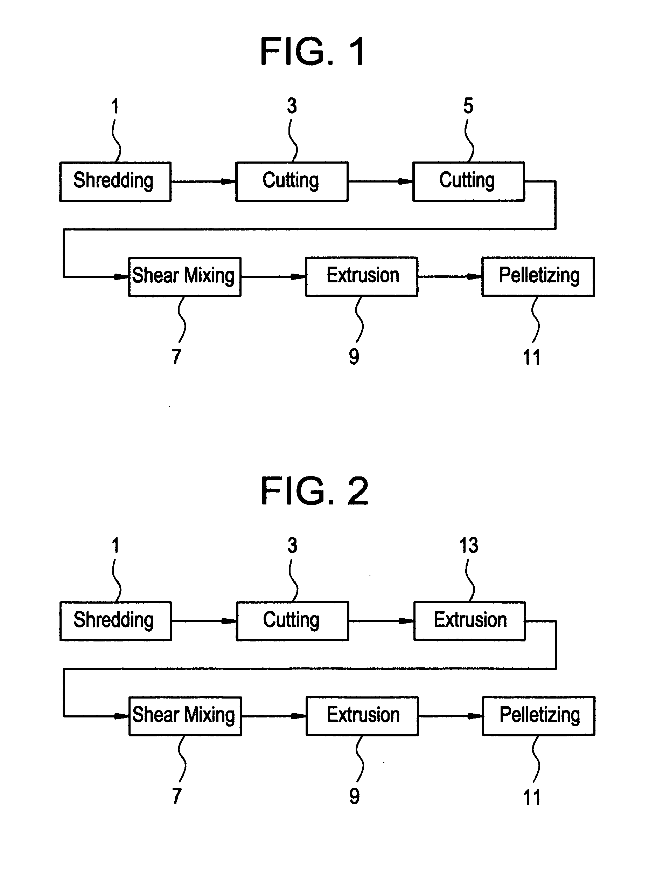

Figures 1 and 2 provide flow diagrams of embodiments of the overall method and apparatus that can be used to recycle carpet. Carpet, e.g., in the form of a carpet bale or the like, can optionally be placed in a shredder 1 where the bulk carpet is shredded, and wherein the carpet has an initial weight per unit area as it enters the shredder 1. The resulting carpet strips can then be fed to cutter(s) 3,5. From the cutters 3,5, the carpet can enter the shear mixer 7, wherein the cut carpet entering the shear mixer has a cut carpet bulk density. The shear mixer 7 melts the cut carpet and reduces any moisture therein to produce a melted carpet. From the shear mixer 7, the melted carpet enters an extruder 9. Also introduced to the shear mixer 5 and/or extruder 9 can be additive(s), plastic, and the like. From the extruder 9, the extruded material can be pelletized 11, or directed to further processing (e.g., introduced to a molding apparatus (not shown)).

The carpet can comprise any available main material (e.g., poly(ethylene terephthalate) (PET), polypropylene, nylon carpet, and the like), with any pile weight. For example, a post-consumer or used carpet can be employed, e.g., for reasons of economy, availability, and environmental considerations. Non-used carpet, such as carpet unacceptable for sale, trim scrap (from production of the carpet), and/or carpet returned by the purchaser, may also be used. Furthermore, the carpet may be in any number of physical conditions including soiled, wet, dyed, treated for stain resistance, clean, and the like, as well as combinations comprising at least one of the foregoing conditions. For shipping economy, space, and the like, the carpet can be in the form of bales that can comprise any number of different types of PET, polypropylene, and/or polyethylene carpets, and the like, e.g., different carpet origins, physical properties, chemical properties, and the like. Unlike many carpet recycling methods, the carpet can be unseparated, i.e., carpet that has not been modified to remove or separate out one or more of the primary components (pile, backing, adhesive, etc.) from the carpet prior to processing. Although an unseparated bulk carpet sample can be more cost effective, separated carpet, or portions thereof can be employed. In other words, if the pile (e.g., fibers), for example, has been reclaimed in another process, the backing and other remaining carpet components can be employed.

Typically, the carpet will comprise pile, a backing, an adhesive, and a filler. The pile and the backing often comprise a thermoplastic material, such as a polyolefin; polyester, nylon, and the like, as well as combinations comprising at least one of the foregoing materials. The adhesive employed to adhere the pile to the backing can comprise a latex material, other adhesives, and the like, such as styrene-butadiene rubber (SBR), acrylate resins, polyvinyl acetate, and the like, as well as combinations comprising at least one of the foregoing adhesives. Finally, the filler, for example, can comprise calcium carbonate, as well as other fillers used with thermoplastic materials.

The carpet can comprise a main material and optionally additive(s), and the like. Generally, the carpet comprises greater than or equal to about 50 weight percent (wt%) main material (e.g., PET, polypropylene, nylon, or the like), or, more specifically, greater than or equal to about 70 wt% main material, and even more specifically, greater than or equal to about 80 wt% main material, based on the total weight of the carpet excluding water weight. The carpet can also comprise greater than or equal to about 5 wt% latex material, may comprise less than or equal to about 20 wt% or so flame retardant, and may comprise less than or equal to about 10 wt% calcium carbonate (e.g., about 0.5 wt% to about 10 wt%). In an exemplary embodiment, a carpet can comprise about 80 wt% to about 85 wt% main material (e.g., PET, polypropylene, nylon, or the like), about 10 wt% to about 15 wt% latex material, and less than or equal to about 10 wt% calcium carbonate, based on the total weight of the carpet including water weight.

In order to attain a desired product from the recycling, various additives can be added to the carpet. The amounts and types of additives employed are based upon the composition of the carpet and the use of the product. For example, the recycled carpet can be formed into pellets that are useful in injection molding plastic articles (e.g., pallets, leaching chambers, end-plates, and the like). Some of the carpet can be tested for composition (e.g., using a spectrometer, by measuring the melt temperature, and/or the like) to determine composition. For example, the melt index can be determined to clarify the amount of additives desired to be introduced into the recycled carpet. The amount of additives can be about 0.3 wt% to about 40 wt%, or, more specifically, about 0.5 wt% to about 20 wt% additives, or, even more specifically, about 1 wt% to about 10 wt%, and yet more specifically, about 1 wt% to about 5 wt%, based upon the total combined weight of the carpet and additives, and including the water weight (e.g., the total combined weight).

Exemplary additives include colorants, stabilizers (e.g., light stabilizers, heat stabilizers, and others), delusterants, flame-retardants (e.g., ATH, and the like), fillers, antimicrobial agents, antistatic agents, optical brighteners, rheology controllers, melt enhancers, desiccants, extenders, processing aids, compatibilizers, flow enhancers, mold release agents, UV absorbers, lubricants, plasticizers, pigments, dyes, blowing agents, impact modifiers, and other additives that impart desired properties to the product. For example, the additives can be PET in an amount of about 2 wt% to about 5 wt%, based upon the total combined weight, and an impact modifier that can be employed in an amount of about 5 wt% to about 10 wt% based upon the total combined weight.

Fillers, such as anhydrous aluminum silicates, mica, feldspar, clays, talc, glass (e.g., flake, fibers, microspheres, nanotubes, and the like), wollastonite, metal oxides (e.g., alumina, titanium dioxide, silica, zinc oxide, and the like), zinc sulfide, ground quartz, barium sulfate, fiberglass, and the like, as well as combinations comprising at least one of the foregoing fillers, can be employed to attain a desired thermal stability, stiffness, texture, and the like. For example, the fillers can comprise clays, talc, calcium carbonate, and the like, as well as combinations comprising at least one of these fillers in amounts of about 5 wt% to about 10 wt%, based upon the total combined weight.

Processing the carpet can comprise reducing the carpet size, e.g., to reduce melting times and to facilitate a constant flow of carpet into the shear mixer 7 and/or the extruder 9. In order to enable the maintenance of a sufficient flow rate of the carpet such that the process is efficient on a production scale, the size of the carpet can be reduced to an average processed size of less than or equal to about 5 inches by less than or equal to about 5 inches, or, more specifically, less than or equal to about 3 inches by less than or equal to about 3 inches, or even more specifically, less than or equal to about 2 inches by less than or equal to about 2 inches, and yet more specifically, less than or equal to about 1.5 inches by less than or equal to about 1.5 inches.

In addition to the size reduction of the carpet, the weight per unit area of the carpet can be substantially maintained at its original (i.e., initial) weight per unit area. From the time the carpet is received in the shredder (at its initial weight per unit area) to the time the carpet exits all of the cutters (at its cut carpet weight per unit area), it is desirable to change the weight per unit area of the carpet by less than or equal to about 15%, or, more specifically, less than or equal to about 10%, or, even more specifically, less than or equal to about 5%, and yet more specifically, less than or equal to about 3%, wherein the change in weight per unit area can be determined by subtracting the cut carpet weight per unit area from the initial carpet weight per unit area, and then dividing the result thereof by the initial carpet weight per unit area.

Any sequence of cutting processes that reduces the size of the carpet to a desired size while avoiding "fluffing" of the carpet can be employed. For example, the carpet can first be processed through an optional shredder 1 that can reduce the carpet to an average size of less than or equal to about 30 inches (76.2 centimeters (cm)), or, more specifically, less than or equal to about 20 inches (61 cm), and, even more specifically, less than or equal to about 12 inches (30.5 cm), as measured along the major (i.e., longest) axis. Desirably, when the shredder 1 is employed, the carpet is passed through the shredder 1; e.g., leaving some material finely shredded and some in longer strips. In one embodiment, for reasons of having a sufficient weight per unit area and for efficiency, the carpet is desirably only passed through the shredder once, wherein only one shredder and no grinders are used in the process.

From the shredder 1, the carpet strips can be directed to one or more cutters 3, 5, with an optional hopper disposed between the shredder and the cutter and/or between the cutters (not shown). Each cutter 3, 5 is intended to chop the carpet into smaller pieces without substantial shredding and/or grinding the carpet (i.e., by changing the weight per unit area of the carpet by less than or equal to about 10%). The amount and orientation of the cutters 3, 5 can be chosen so as to further reduce the size of the carpet to the melt size. For example, two cutters 3, 5 can be oriented at an angle of about 85° to about 95° (e.g., perpendicular) to one another such that the size of the carpet is reduced to a desired average melt size.

The chopped carpet can be introduced to the shear mixer 7 from the cutter(s) 3, 5, to melt the carpet, remove moisture, and, optionally, to enable the introduction of other material(s) (e.g., plastic(s), additive(s), and the like). For example, in addition to the chopped carpet, impact modifiers (e.g., about 5 wt% to about 10 wt%, based upon the total weight) can be added. The carpet and impact modifier can be mixed and heated to about 350°F (about 177°C) to about 450°F (about 232°C) to melt and blend the materials as well as to reduce the water content to less than or equal to about 0.5 wt%. The shear mixer 7 can be operated at atmospheric pressure, enabling facile release of moisture from the carpet. If the water content of the chopped carpet is greater than 0.5 wt%, the water content is reduced to less than or equal to about 0.5 wt%, based upon the total weight of the carpet (including the water), or, more specifically, to less than or equal to about 0.25 wt%. The melting and mixing can be preformed in any shear mixer capable of attaining sufficient temperatures to melt the carpet and vaporize and vent the water. For example, a shear mixer 7 can receive the chopped carpet via a conveyor (not shown). Within the shear mixer 7, the carpet melts and moisture releases to reduce the water content to less than or equal to about 0.5 wt%, thereby forming a melted carpet ribbon. Optionally, additive(s) can be introduced at this stage as well, e.g., impact modifiers, flow enhancers, moisture absorbers, and the like, as well as combinations comprising at least one of the additives disclosed herein.

From the shear mixer 5, the melted carpet ribbon can be introduced to an extruder 9, e.g., via an extruder feed throat, J-block, or the like. The extruder, which can further mix the carpet ribbon and any additives, and can optionally receive additional additive(s), can be a twin screw extruder, single screw extruder, vented extruder (single or multiple screws), or the like. For example, at the throat of the extruder, about 2 wt% to about 5 wt% PET, about 1 wt% to about 5 wt% calcium carbonate, and about 0.05 wt% to about 0.20 wt% melt enhancers, and possibly other additive(s) can be introduced to the melt ribbon, based upon the total combined weight of the melt ribbon and additives (inclusive of water weight). Within the extruder, the carpet ribbon can be further mixed to attain a substantially homogenous melted mixture. For example, the carpet ribbon can be introduced to the extruder 9 where it is processed at temperatures of about 450°F (about 232°C) to about 550°F (about 288°C). Within the extruder 9, the screw mixes the ribbon and additive(s) under pressure as it advances the melt toward a vent section. At the vent section, which is at atmospheric pressure, residual moisture in the melt can be released through the vent, prior to the melt being further mixed and advanced, under pressure, through a die.

From the die, the melt mixture can be further processed (e.g., molded or otherwise used to form an article), formed into a sheet, or pelletized. For example, the melted mixture can be formed into pellets by various pelletizing operations such as passing the mixture through a die and chopper (not shown), using an underwater pelletizer 11, and the like. In one embodiment, the melt can be extruded through an underwater pelletizer at rates of about 5,000 to about 10,000 pounds per hour (lb/hr), depending on feedstock weight per unit area, equipment size, and the like.

In an alternative embodiment, an extruder (e.g., a twin screw extruder, vented extruder, and/or the like, can be used upstream of the shear mixer 7. In this embodiment, the carpet can be introduced to the extruder directly, from the shredder, and/or from the cutter(s). The extruder can initially melt the carpet, can handle fluctuations in the feed rate of the carpet, and can produce an extrudate that can be introduced directly to a shear mixer, can be pelletized directed through a hopper to the shear mixer (to enable a constant feed rate and to control fluctuations in the rate from the extruder), can be pelletized and introduced directly to the shear mixer, and the like, as well as combinations comprising at least one of the foregoing. In the shear mixer the extrudate can be re-melted (if it is in a solid form) and optionally mixed with some or all of the determined amount of additives until the viscosity of the melt ribbon enables a desired flow of the melt ribbon into the extruder, and the water content of the melt ribbon can be less than or equal to about 0.25 wt% to about 0.50 wt%, or, more specifically, less than or equal to about 0.25 wt%, based upon the total weight of the carpet, including the water. As discussed above, from the shear mixer, the melt ribbon can be fed to a vented extruder (e.g., to a vented, single screw extruder), and then fmally processed (e.g., pelletized, molded, and the like).

The pellets can be employed alone or in combination with other materials (e.g., thermoplastic materials and the like (such as virgin PET, polypropylene, and the like)) in various molding processes such as, but not limited to, blow molding, injection molding (e.g., high pressure injection, gas assist, structural foam, and the like), thermoforming (e.g., pressure forming, vacuum forming, stamping, and the like), extrusion (e.g., sheet extrusion, film extrusion, geometric shape (e.g., pipes and the like) extrusion), and the like, to form various articles. Some possible articles include, leaching chambers, pallets, endplates, as well as various other thermoplastic articles.

The following examples are meant to be exemplary, not limiting.

### EXAMPLES

Example 1: Recycle process with uniform flow and downstream extruder.

Carpet to be recycled was tested to determine the material composition, and to determine the moisture level and the melt index. This information was used to determination the types and amounts of additive(s) to be added to the carpet, e.g., based upon the desired end use of the recycled carpet, and water content. (If compatibilizers will not be added during the carpet process, nylon carpet is removed, since it is not compatible with the polypropylene.) The carpet was then shredded to a size of about 3 inches (7.62 centimeters (cm)) by about 12 inches (30.48 cm), and was fed, via a conveyer, to a first cutter where it was chopped to have one dimension that was about 1 inch (i.e., 1 inch by up to about 12 inches). From the first cutter, the initially chopped carpet entered a second cutter disposed at a 90° angle to the first cutter such that the carpet was chopped to have a second dimension of about 1 inch (i.e., 1 inch by 1 inch). The chopped carpet then entered a third chopper that further reduced the carpet size. From the third cutter, the carpet was introduced, at a constant rate, to a shear mixer where it was melted and mixed with the determined amount of additives until the viscosity of the melt ribbon was sufficient to allow the melt to flow out of the shear mixer. From the shear mixer, the melt ribbon was directly fed into the feed throat of a vented, single screw extruder. Within the extruder, the ribbon was further mixed under pressure prior to entering the vent zone of the extruder where residual moisture escaped from the melt mixture. From the vent zone, the melt mixture was further mixed, under pressure, until it exited the extruder through a die and was pelletized with an underwater pelletizer.

Not to be limited by theory, by maintaining the bulk density of the carpet at a bulk density of greater than or equal to 1 pound per cubic foot (lb/ft³), the process described in Example 1 enabled efficient, effective, production scale, recycling of the carpet without processing problems. When the carpet is fluffed (e.g., is shredded and/or ground to a bulk density of less than 1 lb/ft³ (16.0 kilograms per cubic meter (kg/m³) and/or to have a weight per unit area change of greater than 20%), non-uniform introduction of the carpet to the shear mixer can occur. The fluctuation in the flow rate, e.g., the introduction of carpet "plugs", can overflow the mixer, cause pressure fluctuations in the extruder, and/or inhibit proper operation of the pelletizer; and can result in line shutdown. Additionally, fluffed carpet can bridge the throat of the shear mixer, further accentuating the above issues, which ultimately can render a process inefficient for production scale. Although bulk densities of about 1 lb/ft³ might be usable, bulk densities of greater than or equal to about 1.5 lb/ft³ (24.0 kg/m³) facilitate higher production rates. More specifically, bulk densities of greater than or equal to about 2.0 lb/ft³ (32.0 kg/m³) can be employed on a production scale, or, even more specifically, greater than or equal to about 2.5 lb/ft³ (40.0 kg/m³).

In other words, desirably, the weight per unit area of the carpet entering the feed throat of the shredder is substantially the same as the weight per unit area of the carpet entering the shear mixer. Through the processing of the carpet, sand and the like may be vibrated out of the carpet, so the weight (and bulk density) may change slightly due to the removal of the sand, but otherwise remains substantially constant. The cutters employed herein can have an affect on the carpet similar to the carpet being cut by hand with scissors, the size of the carpet pieces reduces, but the other properties, e.g., the weight (i.e., ounces per square yard), remains the same.

Example 2: Recycle process with extruder upstream of the shear mixer.

Carpet to be recycled can be tested to determine the material composition, and to determine moisture levels and melt index. This information can be used to determination the types and amounts of additive(s) to be added to the carpet in the shear mixer. Again, if compatibilizers will not be added during the carpet process, nylon carpet can be removed. The carpet can then be shredded, cut, and directly introduced to a vented, twin-screw extruder. The extruder can initially melt the carpet, can handle fluctuations in the feed rate of the carpet, and can produce an extrudate that can be introduced directly to a shear mixer, can be pelletized and directed through a hopper to the shear mixer (to enable a constant feed rate and to control fluctuations in the rate from the extruder), can be pelletized and introduced directly to the shear mixer, and the like, as well as combinations comprising at least one of the foregoing.

In the shear mixer the extrudate can be re-melted (if it is in a solid form) and optionally mixed with the determined amount of additives until the viscosity of the melt ribbon is sufficient to enable the melt ribbon to be moved from the mixer to the extruder. Also, the moisture content of the melt ribbon can be reduced to less than or equal to about 0.50 wt% based upon a total weight of the extrudate (including the water). From the shear mixer, the melt ribbon can be directly fed to the feed throat of a second extruder (e.g., to a vented, single screw extruder). Optionally, additive(s) can also be fed to the second extruder. Within the second extruder, the ribbon can be further mixed under pressure prior to entering the vent zone of the extruder where residual moisture can escape from the melt mixture. From the vent zone, the melt mixture can be further mixed, under pressure, until it can exit the extruder through a die and be pelletized or otherwise processed.

Example 3: A truckload of bales of carpet is randomly sampled (e.g., 3 bales are selected from the truckload and some material from each of the 3 bales is analyzed for material composition, content and melt index). For example, the load can comprise polypropylene carpet comprising 84 wt% polypropylene, 11 wt% latex, and the balance was calcium carbonate, with a moisture content averaging 8 wt% and a melt index of 3. The bales can then be shredded to allow the material to be fed into the mixer. Based on compositional analysis, impact modifiers (e.g., 10 wt%) can be added to the carpet at the feed throat of the shear mixer. The material can be processed in the shear mixer at 380°F into a homogeneous blend of carpet and impact modifier, while driving off excess water content (via converting water to steam and venting out of mixer) until residual water content is less than 0.5 wt% based upon the total weight of the carpet, including the water. The blend can then be fed directly into the feed throat of an extruder along with 3 wt% to 7 wt% PET and processed at 450°F to further mix and blend the materials for introduction to an underwater pelletizer for conversion to pellets.

Example 4: An endplate for use with a leaching chamber for dispersing liquids in soil can be formed using the recycled carpet. The recycled carpet can be melted without separating various carpet layers. Water content of the carpet entering the shear mixer can be up to or even exceed about 10 wt%, based upon a total weight of the carpet entering the shear mixer (including the water). The water content of the recycled carpet is reduced to less than or equal to about 0.5 wt% within the shear mixer, based upon the total weight of the recycle carpet and the water, as discussed in Example 1, to form a melt ribbon. The melt ribbon, being properly screened for contaminant elimination, can be mixed with an additive to form a parison. The parison can be disposed, e.g., extruded, between mold halves and one end of the parison can be closed. An inert gas can then be blown into the parison to form a balloon and the mold halves can be closed to form the endplate. The endplate can comprise any appropriate endplate geometry, e.g., an inner wall and an outer wall defining a central portion having an interior channel, and at least one connector disposed about the periphery of the central portion, the connector capable of engaging the leaching chamber.

Example 5: Leaching chamber for dispersing liquids in soil, of the type having a hollow interior with open ends and an open bottom enabling passage of liquids therethrough can be formed from the melt ribbon or the pellets of recycled carpet. The recycle carpet can be melted without separating various carpet layers. The water content of the recycle carpet can be reduced to less than or equal to about 0.5 wt%, based upon the total weight of the recycle carpet and the water, by converting excess water to steam and venting the steam out of mixer. The water reduced material can then be feed into an extruder. An additive can be mixed with the melt ribbon to form a mixture that can be extruded to form pellets. The pellets can be heated to melting and introduced to a mold having a negative of the leaching chamber. Once the melt has cooled, actively or passively, the leaching chamber can be removed from the mold.

Example 6: A plastic article can be produced by extruding a flat sheet manufactured from melt ribbon or the pellets of recycled carpet and then creating the article geometry through a thermoforming or stamping manufacturing process. The pellets can first be produced as per Example 3. The pellets or melt ribbon is feed through a sheet extrusion line having an extruder to melt the pellets (or ribbon), sheet die (for melt distribution to form sheet), calendaring stack (flattens, calendars, sizes sheet, initiates cooling), cooling stage (typically a water bath), and a cut-off station or take-up roll (depending on sheet thickness or end use). The sheet is then heated and formed by drawing (vacuum thermoforming), pushing (pressure thermoforming), or compressing (stamping) the sheet over a tool containing the negative of the plastic article geometry. Once the melt has cooled, actively or passively, the plastic article can be removed from the mold. This process can be employed to form a plastic pallet or component thereof.

The recycle pellets, which may or may not comprise additives, can be combined with virgin material, such as polypropylene, high density polypropylene, PET, nylon, and the like (e.g., non-carpet recycle), when forming an article. For example, the recycle pellets can be employed to form an article in an amount of about 0.1 wt% to about 100 wt% recycle material (i.e., the pellet reformed into the desired article), based on the total weight of the article. The specific amount of the recycle material will depend upon the requirements of the actual article. For example, for a leaching chamber, endplate, and the like, greater than or equal to 50 wt% recycle material can be employed, with greater than or equal to about 75 wt% recycle material preferred, greater than or equal to about 90 wt% recycle material more preferred, and greater than or equal to about 95 wt% recycle material especially preferred. For a pallet (e.g., a plastic pallet), about 5 wt% to about 40 wt%, or greater, recycle material can be employed, or, more specifically, about 10 wt% to about 30 wt% recycle material, or, even more specifically, about 15 wt% to about 25 wt% recycle material, based upon the total weight of the recycle composition in the plastic pallet.

Injection molding of recycled polypropylene carpet has not previously been successful due to: 1) water content of the carpet, 2) the perceived need to produce pure polypropylene pellets, thus requiring significant separation of materials, and 3) the recycled carpet's fractional melt index (e.g., polypropylene used to make carpet fibers typically has a melt index of less than 2). While fractional melts are desired for some molding processes such as sheet extrusion (melt range typically from fractional up to 4), fractional melts are not desirable for blow molding (typical melt index of 2 to 6) and injection molding (typical melt index of greater than about 6). It has been discovered that by reducing the water content and blending the right amount of additives to alter the melt index, appropriate pellets can be formed even from recycled carpet that has not been separated into its various constituents (e.g., pile, adhesive, backing, etc.). The disclosed process actually allows the recycling of carpet that can be saturated with water (e.g., that was in the rain).

A pellet can be formed using the disclosed process that has the water content is reduced to less than 2 wt%, or, more specifically, less than or equal to about 0.5 wt%, and, even more specifically, less than or equal to about 0.25 wt%, based upon the total weight of the pellet, including any water. Additionally, a melt index of greater than or equal to about 2 can be attained, or, more specifically, greater than or equal to about 4, and even more specifically, greater than or equal to about 6.

The terms "first," "second," and the like, herein do not denote any order, quantity, or importance, but rather are used to distinguish one element from another, and the terms "a" and "an" herein do not denote a limitation of quantity, but rather denote the presence of at least one of the referenced item. The modifier "about" used in connection with a quantity is inclusive of the stated value and has the meaning dictated by the context (e.g., includes the degree of error associated with measurement of the particular quantity). All ranges disclosed herein are inclusive and combinable (e.g., ranges of "up to about 25 wt%, or, more specifically, about 5 wt% to about 20 wt%," is inclusive of the endpoints and all intermediate values of the ranges of "about 5 wt% to about 25 wt%," etc.).

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention.

What is claimed is:

## Claims

1. A method for recycling carpet, comprising:
decreasing the recycle carpet to an average processed size of less than or equal to about 5 inches by less than or equal to about 5 inches, to form a processed carpet, wherein a weight per unit area of the recycle carpet is changed by less than or equal to about 15% during the decreasing;
shear mixing and melting the processed carpet to form a melt ribbon;
processing the melt ribbon in a vented extruder to form an extrudate; and
pelletizing the extrudate.

2. The method as in Claim 1, wherein decreasing an average initial size of recycle carpet further comprises cutting the carpet in a series of cutters.

3. The method as in Claim 2, further comprising shredding the carpet prior to cutting the carpet.

4. The method as in Claim 2, wherein a flow of cut carpet from a first cutter in the series of cutters enters a second cutter in the series of cutters at an angle of about 85° to about 95°.

5. The method of Claim 1, wherein average processed size is less than or equal to about 3 inches by less than or equal to about 3 inches.

6. The method of Claim 5, wherein average processed size is less than or equal to about 2 inches by less than or equal to about 2 inches.

7. The method as in Claim 1, wherein the weight per unit area is changed by less than or equal to about 10%.

8. The method as in Claim 7, wherein the weight per unit area is changed by less than or equal to about 5%

9. The method as in Claim 1, wherein prior to shear mixing, the processed carpet is melted in an extruder.

10. The method as in Claim 9, further comprising pelletizing the processed carpet prior to shear mixing.

11. A method for recycling carpet, comprising:
melting recycle carpet in a first extruder to form an initial extrudate;
shear mixing the initial extrudate in a shear mixer to form a melt ribbon;
processing the melt ribbon in a vented extruder to form a subsequent extrudate; and
pelletizing the subsequent extrudate.

12. The method as in Claim 11, further comprising pelletizing the initial extrudate prior to shear mixing the initial extrudate.

13. The method as in Claim 12, further comprising introducing the pelletized initial extrudate to a container, and introducing the pelletized initial extrudate to the shear mixer at a substantially constant rate.

14. The method as in Claim 12, further comprising decreasing an average initial size of the recycle carpet to an average processed size of less than or equal to about 5 inches by less than or equal to about 5 inches, prior to introducing the recycle carpet to the first extruder, and wherein a weight per unit area of the recycle carpet is changed by less than or equal to about 15% during the decreasing.

15. The method as in Claim 11, further comprising decreasing an average initial size of recycle carpet to an average processed size of less than or equal to about 5 inches by less than or equal to about 5 inches, prior to introducing the recycle carpet to the first extruder, and wherein, when entering the first extruder, the recycle carpet has a bulk density of greater than or equal to about 1.5 lb/ft³.

16. The method as in Claim 15, wherein the bulk density is greater than or equal to about 2.0 lb/ft³.

17. A method for recycling carpet, comprising:
decreasing an average initial size of recycle carpet to an average processed size of less than or equal to about 5 inches by less than or equal to about 5 inches, to form a processed carpet, wherein a bulk density of the processed carpet is greater than or equal to about 1.5 lb/ft³;
shear mixing and melting the processed carpet to form a melt ribbon; and
processing the melt ribbon in a vented extruder to form an extrudate.

18. The method as in Claim 17, further comprising pelletizing the extrudate.

19. The method as in Claim 17, wherein the bulk density is greater than or equal to about 2.0 lb/ft³.

20. The method as in Claim 19, wherein the bulk density is greater than or equal to about 2.5 lb/ft³.
